# EUROPÄISCHE PATENTSCHRIFT

(11) **EP 1 064 839 B1**
(45) Veröffentlichungstag und Bekanntmachung des Hinweises auf die Patenterteilung: **15.11.2006**
(21) Anmeldenummer: 00112931.1
(22) Anmeldetag: 20.06.2000
(51) Int. Cl.: A01F 15/14, A01F 15/07

(54) **Vorrichtung zum Sichern eines losen Garnendes auf einem Rundballen**
Device to fix a loose end of twine on a round bale
Dispositif pour fixer un bout de fil libre sur une balle ronde

(30) Priorität: 02.07.1999 DE 19930674
(43) Veröffentlichungstag der Anmeldung: 03.01.2001
(73) Patentinhaber: DEERE & COMPANY, Moline, Illinois 61265-8098 (US)
(72) Erfinder: Viaud, Jean, 70100 Gray (FR); Chabassier, Aurélien, 77400 Dampmart (FR); Fournier, Jean Francois, 70100 Chargey-les-Gray (FR); Repellin, Jérôme, 38880 Autrans (FR)
(74) Vertreter: Magin, Ludwig Bernhard

(56) Entgegenhaltungen:
- EP-A- 0 289 091
- EP-A- 0 535 532
- EP-A- 0 820 691
- EP-A- 0 864 251
- DE-C- 19 539 297

## Beschreibung

Die Erfindung betrifft Vorrichtung zum Sichern eines losen Garnendes auf einem Rundballen mittels eines selbsthaltenden Bandes, wobei das Band über eine Leitfläche einem Ballenpreßraum zugeführt wird, der teilumfangsmäßig von Förderelementen umgeben ist.

Die DE-A-41 32 664 offenbart eine Rundballenpresse mit einer Garnbindevorrichtung und einer Vorrichtung zum Sichern eines auf der Umfangsfläche des Rundballens aufliegenden Garnendes. Die Sicherung des Garnendes erfolgt nach einer Ausführungsform mittels eines Bandes, das klebend ausgebildet sein kann und mittels zweier Zuführrollen und einem Leitblech zu einem Einlaßspalt für das Erntegut geführt wird. Dort wird das Band von dem sich drehenden Ballen erfaßt und um diesen gewickelt.

Das der Erfindung zugrunde liegende Problem wird darin gesehen, daß die Zuführrollen eigens angetrieben werden müssen und Kosten verursachen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise kann das Band mittels eines ohnehin vorhandenen Förderelementes zu dem Ballenpreßraum bewegt werden, während im Stand der Technik hierzu eigens angetriebene Rollen vorgesehen waren. Da das Band im Bereich der Leitfläche abgeschnitten wird, verbleibt auch stets ein mit einer Vorratsrolle vorhandener Teil im Bereich der Leitfläche, der beim nachfolgenden Wickelvorgang von den Förderelementen erfaßt werden kann.

Es ist zwar bereits aus der EP-A1-0 820 691 bekannt, eine Leitfläche an Riemen oder Preßwalzen anzulegen, damit diese Netz mitnehmen und einem Ballenpreßraum zuführen; hierbei handelt es sich jedoch um eine Netzbindevorrichtung, die nicht zusammen mit einer Garnbindevorrichtung betrieben wird. Das Problem loser Garnenden liegt bei einer Netzbindung nicht vor.

Die DE-A1-27 05 101 offenbart bereits eine Vorrichtung, die es ermöglicht, gleichzeitig Garn und Folie um einen Ballen zu wickeln, wobei das Garn sowohl über wie auch unter der Folie liegen kann. Diese Folie, die auch über die gesamte Breite des Ballens in einer Lage zugeführt werden kann, ist nicht fähig und dazu bestimmt, die losen Garnenden zu sichern, sondern die Außenhaut des Ballens abzudecken und gegen Witterungseinflüsse zu sichern. Das Band würde sich mit den losen Garnenden von dem Ballen abwickeln.

Die Verwendung einer Rolle, auf der das Band abläuft, hat den Vorteil der Reduzierung des Reibwiderstands beim Einziehen des Bandes und der Möglichkeit, das Band fest an das sich bewegende Förderelement anzudrücken.

Bei der Verwendung einer ortsfesten Trennvorrichtung bedarf es keiner zusätzlichen beweglichen Teile für den Trennvorgang; vielmehr wird der Trennvorgang durch die ohnehin vorzunehmende Bewegung der Leitfläche eingeleitet. Wenn die Leitfläche nicht an den Förderelementen anliegt, wird das Band bereits von dem sich drehenden Rundballen gezogen und steht unter einer Spannung, die eine Anlage des Bandes an der Trennvorrichtung hervorruft.

Die Verwendung von Stiften hat gegenüber Schneiden und Gegenschneiden den Vorteil, daß es keiner Scherwirkung zum Trennen bedarf, sondern das Band perforiert wird und dann abreißen kann. Je dünner und spitzer die Stifte ausgebildet sind, desto leichter durchdringen sie das Band. Schließlich kann auch eine gezahnte oder gezackte Leiste verwendet werden.

Eine Bremse hat den Vorteil, daß eine Rolle mit vorrätigem Band nicht nachläuft und überschüssiges Band abrollt, das zu Störungen führen kann. Die Bremse ermöglicht es auch, die Spannung in dem Band beim Trennen zu erhöhen sowie eine einwandfreie Haftung der Bandlagen aufeinander sicherzustellen.

Die Verwendung einer Betätigungsvorrichtung, insbesondere einer fernsteuerbaren, macht eine Fernbedienung und eine Steuerung abhängig von verschiedenen Betriebszuständen der Rundballenpresse möglich. Mit einer solchen Betätigungsvorrichtung, die ein einfacher Stellmotor sein kann, kann die Leitfläche angehoben und abgesenkt werden - entweder direkt und linear oder indirekt über Lenker und dergleichen.

Der Vorteil einer Nocken- oder Hebelsteuerung liegt darin, daß ein solcher Nocken oder Hebel auf einer Welle angebracht werden kann, die durch eine Drehbewegung den Nocken oder Hebel in Anlage an der Leitfläche bringen und von diesem entfernen kann. Es bedarf somit keiner hin- und hergehenden Bewegung von Stellgliedern, die schwieriger umzusetzen ist, als eine rotierende.

Je geringer der Reibwiderstand auf der Leitfläche ist, desto größer ist die Mitnahmekraft durch die Förderelemente.

In der Zeichnung ist ein nachfolgend näher beschriebenes Ausführungsbeispiel der Erfindung dargestellt. Es zeigt:
- Fig. 1: eine Rundballenpresse in Seitenansicht und in schematischer Darstellung,
- Fig. 2: den rückwärtigen Bereich der Rundballenpresse mit einer Vorrichtung zum Sichern eines losen Garnendes auf einem Rundballen,

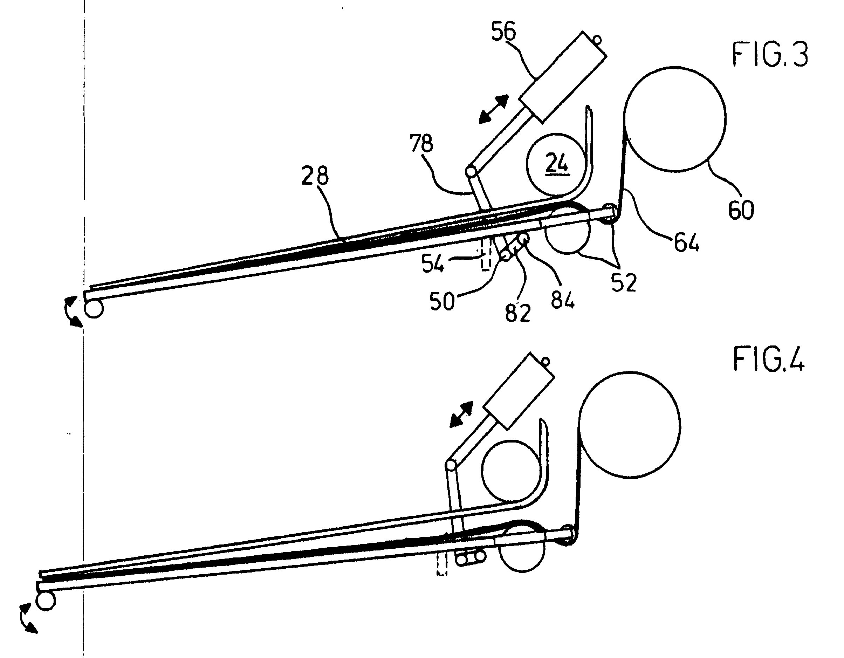

- Fig. 3: die Vorrichtung nach Figur 2 in einer Betriebsstellung und in schematischer Darstellung und
- Fig. 4: die Vorrichtung nach Figur 2 bzw. 3 in einer Außerbetriebsstellung und in schematischer Darstellung.

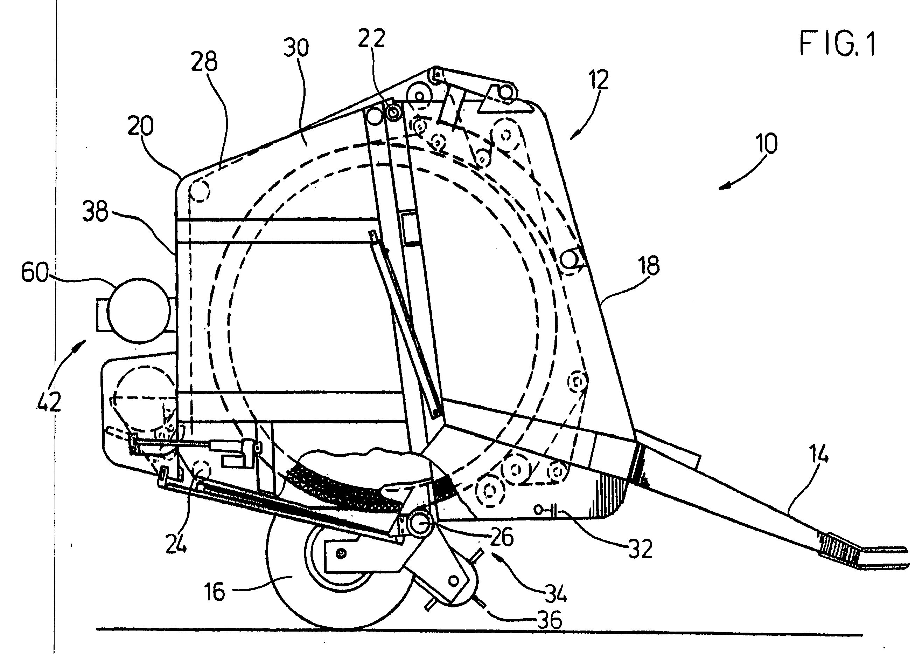

Figur 1 zeigt eine Rundballenpresse 10 mit einem Gehäuse 12, das mittels einer Deichsel 14 an einen nicht dargestellten Ackerschlepper angehängt werden kann und sich auf Rädern 16 abstützt. Das Gehäuse 12 setzt sich aus einer vorderen, starren Gehäusehälfte 18 und einer rückwärtigen, vertikal schwenkbaren Gehäusehälfte 20 zusammen, die in einem oben liegenden Gelenk 22 schwenkbar miteinander verbunden sind. Das Gehäuse 12 trägt eine Vielzahl von Walzen, von denen eine rückwärtige untere und eine vordere untere der rückwärtigen Gehäusehälfte 24 und 26 gezeigt sind. Über die Walzen verlaufen mehrere nebeneinander angeordnete endlose Förderelemente 28, die mit Seitenwänden 30 des Gehäuses 12 einen Ballenpreßraum 44 größtenteils umgeben. In diesem Ausführungsbeispiel sind die Förderelemente 28 als Riemen ausgebildet. In dem unteren Bereich des Ballenpreßraums 44 ist ein Einlaß 34 vorgesehen, der rückwärtig von der Walze 26 begrenzt wird und von einer Pick-Up 36 aufgenommenes Gut in den Ballenpreßraum 44 eintreten läßt. An einer Rückwand 38 der rückwärtigen Gehäusehälfte 20 ist eine Netzbindevorrichtung 40 vorgesehen, mit der ein nicht gezeigtes Netz in den Ballenpreßraum 44 eingeführt werden kann, das um einen in dem Ballenpreßraum 44 gebildeten nicht näher bezeichneten Rundballen gewickelt werden kann, um diesen nach dem Verlassen des Ballenpreßraums 44 am Auseinanderfallen zu hindern. Unterhalb der Deichsel 14 und im Bereich des Einlasses 34 ist eine Garnbindevorrichtung 32 vorgesehen, mit der Garn um den sich drehenden Rundballen gewickelt werden kann, um diesen zu binden. In diesem Ausführungsbeispiel ist die Garnbindevorrichtung 32 so ausgebildet, daß die letzten Garnwindungen an der in Vorwärtsfahrtrichtung linken Seite des Rundballens aufgelegt werden. Eine soweit beschriebene Rundballenpresse 10 ist bereits im Stand der Technik bekannt und bedarf somit keiner weiteren Beschreibung.

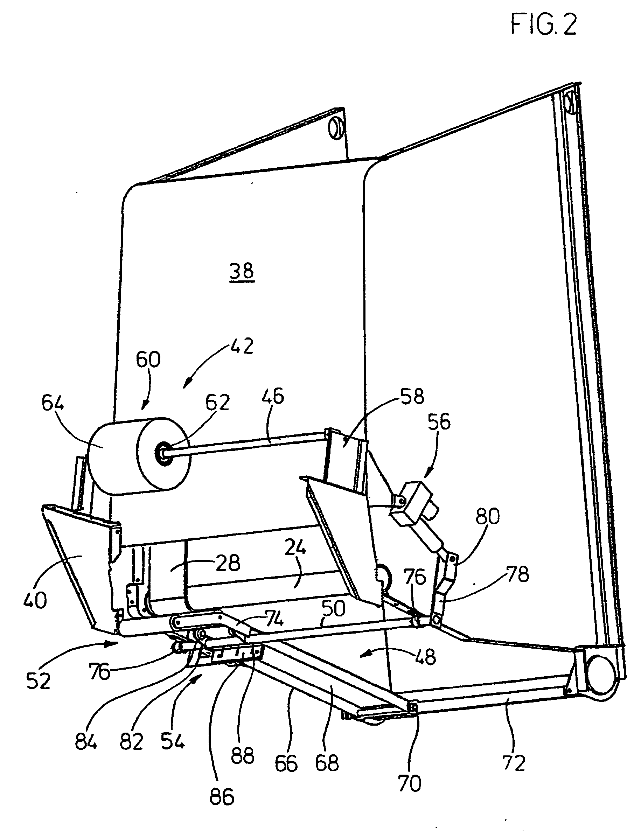

Figur 2 zeigt die rückwärtige Gehäusehälfte 20 in einer perspektivischen Darstellung von hinten rechts. In dieser Darstellung ist insbesondere die rechte rückwärtige Seitenwand 30, ein Förderelement 28 und eine Vorrichtung 42 zum Sichern der losen Garnenden auf der Oberfläche des Rundballens zu sehen. Von der Netzbindevorrichtung 40 sind nur nicht näher bezeichnete Seitenwände gezeigt, um die Erfindung besser darstellen zu können. Es wird jedoch darauf hingewiesen, daß die Erfindung auch dann verwirklicht werden kann, wenn die Netzbindevorrichtung 40 montiert ist.

Die Vorrichtung 42 enthält unter anderem einen Rollenträger 46, eine Leitfläche 48, eine Stellwelle 50, ein Rollenpaar 52, eine Trennvorrichtung 54 und eine Betätigungsvorrichtung 56.

Die Vorrichtung 42 ist hier in Verbindung mit einer Rundballenpresse 10 mit einem größenvariablen Ballenpreßraum 44 gezeigt, der von Förderelementen 28 umgeben ist. Abweichend hiervon kann diese Vorrichtung 42 auch an einer Rundballenpresse 10 mit einem unveränderlichen Ballenpreßraum 44 und an einer anderen Stelle als an der Rückwand 38 vorgesehen werden. Ebenso könnten anstatt der Riemen auch Ketten oder Rollen verwendet werden.

Der Rollenträger 46 ist in der Form einer starren Achse ausgebildet und wird in Trägern 58 an der Rückwand 38 gehalten. Der Rollenträger 46 ist zur Aufnahme einer Rolle 60 vorgesehen, wobei zwischen der Rolle 60 und dem Rollenträger 46 eine Bremse 62 vorgesehen ist. Die Bremse 62 hat zum einen die Aufgabe, die Rolle 60 an einer freien Drehbewegung auf dem Rollenträger 46 zu hindern und zum anderen die Rolle 60 auf dem Rollenträger 46 in seitlicher Richtung festzulegen. Im dargestellten Ausführungsbeispiel befindet sich der Rollenträger 46 oberhalb der Netzbindevorrichtung 40. Abweichend hiervon könnte die Rolle 60 aber auch auf einer evtl. vorhandenen Achse für eine Netzrolle gelagert werden. Des weiteren erstreckt sich der Rollenträger 46 über die gesamte Breite des Ballenpreßraums 44, so daß Band 64 an jeder Stelle in der axialen Richtung des Rundballens zugeführt werden kann. Grundsätzlich reicht es jedoch auch aus, wenn die Rolle 60 seitlich oder in der Mitte des Rundballens gelagert ist.

Die Rolle 60 enthält eine große Menge von dünnem, elastischem, festem und haftendem Band 64. Die Haftung kann durch einen ein- oder zweiseitig auf das Band 64 aufgebrachten Kleber oder durch Adhäsion erreicht werden.

Die Leitfläche 48 ist als ein umgekehrtes "U" ausgebildet, dessen Schenkel 66 sich also nach unten erstrecken und zwischen sich einen Boden 68 aufnehmen. Die dem Förderelement 28 zugewandte Seite des Bodens 66 ist sehr glatt ausgeführt, so daß sie einen geringen Reibwert aufweist. Der Reibwert kann auch noch dadurch verringert werden, daß auf den Boden ein anderes Material, z. B. PTFE, also Teflon, aufgebracht wird. Die Leitfläche 48 erstreckt sich im wesentlichen von unterhalb der Walze 26 aus bis zu der Rückwand 38. In ihrem vorderen Endbereich ist sie mittels eines Lagers 70 vertikal schwenkbar an einer Traverse 72 der rückwärtigen Gehäusehälfte 20 gelagert. In ihrem rückwärtigen Endbereich erstreckt sie sich oberhalb und bis über die Stellwelle 50 hinaus und weist endseitig zwei Arme 74 auf, in denen das Rollenpaar 52 drehbar aufgenommen ist. Die Lage der Leitfläche 48 ist so gewählt, daß sie vertikal mit einem Förderelement 28 und der Rolle 60 fluchtet. Der Boden 68 der Leitfläche 48 weist im Bereich der Trennvorrichtung 54 nicht gezeigte Öffnungen auf.

Die Stellwelle 50 erstreckt sich in diesem Fall unterhalb der rückwärtigen Gehäusehälfte 20 und über deren gesamte Breite. Zur schwenkbaren Lagerung sind Lager 76 an der Unterseite der Seitenwände 30 vorgesehen. An der in der Fahrtrichtung rechten Seite ist die Stellwelle 50 mit einem Hebelarm 78 drehfest verbunden, wobei der Hebelarm 78 an dem der Stellwelle 50 gegenüberliegenden Endbereich mit einer Gabel 80 versehen ist. Im Bereich der Leitfläche 48 und zwischen den Schenkeln 66 sind zwei Arme 82 radial an die Stellwelle 50 angebracht, vorzugsweise angeschweißt. An dem freien Ende tragen die Arme 82 Rollen 84, die an der Unterseite des Bodens 68 anliegen.

Das Rollenpaar 52 ist in der Haupterstreckungsrichtung der Leitfläche 48 und mit geringem Abstand zueinander in den Armen 74 drehbar gelagert. Die Lage ist so gewählt, daß eine vordere Rolle in Anlage an die rückwärtige Walze 24 zur Anlage bringbar ist, während eine rückwärtige Rolle der Umlenkung des Bandes 64 dient. Eine oder beide der Rollen kann wahlweise als eine Spreizrolle ausgebildet werden, die das Band 64 in der Breite streckt, wenn es darüber abläuft. Die Befestigung des Rollenpaars 52 mittels der Arme 74 stellt sicher, daß sich die Rollen gemeinsam mit der Leitfläche 48 bewegen.

Die Trennvorrichtung 54 weist eine Leiste 86 auf, die sich unterhalb der Leitfläche 48 quer zu deren Längsachse erstreckt und starr an der Unterseite der linken Seitenwand 30 angebracht ist. An der Leiste 86 sind mehrere sich vertikal erstreckende spitze Stifte 88 angebracht, die sich durch die zuvor erwähnten Öffnungen in dem Boden 68 der Leitfläche 48 erstrecken können. Die Länge der Stifte 88 ist so gewählt, daß sie sich durch die Öffnungen erstrecken und oberhalb der Führungsfläche des Bandes 64 enden, wenn sich die Leitfläche 48 in einer unteren Warte- oder Außerbetriebsstellung befindet, während sie sich in dem Innenbereich des "U" erstrecken, wenn die Leitfläche 48 zu dem Förderelement 28 hin bewegt ist. Anstatt der im wesentlichen nagelförmigen Stifte 88 könnten auch Zacken, Zähne oder dergleichen vorgesehen werden, mit denen es möglich ist, das Band zu perforieren, so daß es reißt, wenn es durchdrungen wird. Aufgrund des von dem Rundballen auf das Band 64 ausgeübten Zugs müssen die Stifte 88 geeignet sein, hohe Biegemomente aufzufangen, wenn sie in das Band 64 eindringen. Anstelle einer starren Trennvorrichtung 54 könnte auch eine verstellbare und anstatt der Stifte 88 könnte auch eine Schneide verwendet werden.

Die Betätigungsvorrichtung 56 ist in dem dargestellten Ausführungsbeispiel als ein Elektromotor ausgebildet, der einenends an der Seitenwand 30 und anderenends in der Gabel 80 schwenkbar gelagert ist. Ein Elektromotor hat den Vorteil, daß er einfach angesteuert werden kann; dennoch wäre es auch möglich, einen Hydraulik- oder Pneumatikmotor zu verwenden. Darüber hinaus könnte auch eine rein mechanische Bedienung erfolgen. Die Betätigungsvorrichtung 56 kann aus- und eingefahren werden und somit über den Hebelarm 78 die Stellwelle 50 schwenken. Die Steuerung oder Regelung erfolgt über eine nicht gezeigte Vorrichtung, in der beispielsweise Signale über den Bindevorgang durch die Garnbindevorrichtung 32 und die Stellung der rückwärtigen Gehäusehälfte 20 einfließen können.

Das Band 64 wird wie folgt zum Gebrauch vorbereitet.

Die Rolle 42 wird auf den Rollenträger 46 aufgeschoben, und der Rollenträger 46 wird an den Trägern 58 gesichert. Anschließend wird bzw. werden die Bremse(n) 62 angespannt, z. B. durch Anlegen von federbelasteten Konuskupplungen, so daß eine freie Drehbewegung der Rolle 42 vermieden wird. Anschließend wird Band 64 von der Rolle 42 abgezogen, um die Unterseite der rückwärtigen Rolle und schließlich über die Oberseite der vorderen Rolle jeweils des Rollenpaars 52 gelegt, so daß ein Ende des Bands 64 in dem Spalt zwischen der Oberseite des Bodens 68 und der Unterseite des Förderelements 28 zu liegen kommt.

Nach alledem ergibt sich folgende Funktion, wobei davon ausgegangen wird, daß das Band 64 in der soeben geschilderten Weise eingelegt ist.

Nach einem abgeschlossenen Bindevorgang durch die Garnbindevorrichtung 32 liegen ein oder mehrere lose Garnenden auf dem linken Endbereich des Rundballens und zwar in Deckung mit dem Band 64. Die erwähnte Steuervorrichtung erhält ein Signal und fährt die Betätigungsvorrichtung 56 aus, so daß über den Hebelarm 78 die Stellwelle 50 und mit dieser die Arme 82 verschwenkt werden. Durch die Anlage der Arme 82 bzw. deren Rollen 84 an der Unterseite des Bodens 68 wird die Leitfläche 48 angehoben und mit dem daraufliegenden Band 64 an die Unterseite des sich bewegenden Förderelements 28 gedrückt. Aufgrund der hohen Reibung zwischen dem Band 64 und dem Förderelement 28 einerseits und der geringen Reibung und der Leitfläche 48 andererseits wird das Band 64 mitgenommen und bis zu dem Einlaß 34 gefördert, wo es um die Walze 26 verläuft und in den Spalt zwischen dem Rundballen und dem Förderelement 28 gelangt. Der Rundballen nimmt das Band 64 weiter mit und wickelt es um seine Umfangsfläche im Bereich der losen Garnenden. Nach mehr als einer Umdrehung legt sich die zweite Lage des Bandes 64 auf die erste Lage auf und haftet aufgrund der Adhäsion oder des Klebemittels, so daß die losen Garnenden gesichert sind. Sobald ein sicherer Haftschluß der Bandlagen gewährleistet ist, wird die Leitfläche 48 wieder abgesenkt, wodurch die Stifte 88 durch die Öffnungen hindurchtreten und das Band 64 auf die Stifte 88 abgesenkt wird. Sobald das Band 64 von den Stiften 88 durchdrungen ist, reißt der unter Zug stehende stromabwärts gelegene Teil ab, während der mit der Rolle 42 verbundene Teil an den Stiften 88 gehalten wird. Da die Rolle 42 aufgrund der Bremse 62 nicht oder kaum nachdreht, kommt sie unmittelbar zum Stehen.

## Patentansprüche

1. Vorrichtung (42) zum Sichern eines losen Garnendes auf einem Rundballen mittels eines selbsthaltenden Bandes (64), wobei das Band (64) über eine Leitfläche (48) einem Ballenpreßraum (44) zugeführt wird, der teilumfangsmäßig von Förderelementen (28) umgeben ist, **dadurch gekennzeichnet, daß** die Leitfläche (48) in eine an wenigstens einem Förderelement (28) anliegende und eine davon entfernte Stellung bringbar ist und eine Trennvorrichtung (54) im Bereich der Leitfläche (48) vorgesehen ist.

2. Vorrichtung nach Anspruch 1, **dadurch gekennzeichnet, daß** im Bereich der Leitfläche (48) wenigstens eine Rolle (52) vorgesehen ist, mit der das Band (64) an ein Förderelement (28) anlegbar ist.

3. Vorrichtung nach Anspruch 1 oder 2, **dadurch gekennzeichnet, daß** die Trennvorrichtung (54) ortsfest angeordnet ist und in der von dem Förderelement (28) beabstandeten Stellung der Leitfläche (48) über die Leitfläche (48) hinausragt.

4. Vorrichtung nach einem oder mehreren der vorherigen Ansprüche, **dadurch gekennzeichnet, daß** die Trennvorrichtung (54) Stifte (88) zum Durchdringen des Bandes (64) aufweist.

5. Vorrichtung nach einem oder mehreren der vorherigen Ansprüche, **dadurch gekennzeichnet, daß** eine das Band (64) bevorratende Rolle (60) von einer Bremse (62) beaufschlagbar ist.

6. Vorrichtung nach einem oder mehreren der vorherigen Ansprüche, **dadurch gekennzeichnet, daß** die Leitfläche (48) mittels einer elektrischen, hydraulischen oder pneumatischen Betätigungsvorrichtung (56) bewegbar ist.

7. Vorrichtung nach einem oder mehreren der vorherigen Ansprüche, **dadurch gekennzeichnet, daß** die Leitfläche (48) mittels einer Nocken- oder Hebelsteuerung verstellbar ist.

8. Vorrichtung nach einem oder mehreren der vorherigen Ansprüche, **dadurch gekennzeichnet, daß** die Leitfläche (48) mit einem Belag geringer Reibung, insbesondere mit PTFE beschichtet oder belegt ist.

## Claims

1. Device (42) for securing a loose twine end on a round bale by means of an self-adhesive tape (64), wherein the tape (64) is fed via a guide structure (48) to a baling chamber (44), which is surrounded over part of its circumference by conveying elements (28), **characterised in that** the guide structure (48) can be brought into a position resting against at least one conveying element (28) and a position spaced therefrom, and a separating device (54) is provided in the region of the guide structure (48).

2. Device according to Claim 1, **characterised in that** in the region of the guide structure (48) at least one roll (52) is provided, by means of which the tape (64) can be applied against a conveying element (28).

3. Device according to Claim 1 or 2, **characterised in that** the separating device (54) is fixedly arranged and projects beyond the guide structure (48) in the position of the guide structure (48) spaced from the conveying element (28).

4. Device according to one or more of the preceding claims, **characterised in that** the separating device (54) has pins (88) for perforating the tape (64).

5. Device according to one or more of the preceding claims, **characterised in that** a roll (60) storing the tape (64) can be acted on by a brake (62).

6. Device according to one or more of the preceding claims, **characterised in that** the guide structure (48) is movable by means of an electric, hydraulic or pneumatic actuating device (56).

7. Device according to one or more of the preceding claims, **characterised in that** the guide structure (48) is adjustable by means of a cam or lever control means.

8. Device according to one or more of the preceding claims, **characterised in that** the guide structure (48) is coated or covered with a low-friction covering, in particular with PTFE.

## Revendications

1. Dispositif (42) destiné à fixer un bout de ficelle lâche sur une balle ronde au moyen d'une bande (64) auto-maintenue, la bande (64) étant amenée par l'intermédiaire d'une surface de guidage (48) dans une chambre de compactage des balles (44) qui est entourée sur une partie du pourtour par des éléments de transport (28), **caractérisé en ce que** la surface de guidage (48) peut être amenée dans une position en appui contre au moins un élément de transport (28) et dans une position écartée de celui-ci et il est prévu un dispositif de séparation (54) dans la zone de la surface de guidage (48).

2. Dispositif selon la revendication 1, **caractérisé en ce que**, dans la zone de surface de guidage (48), il est prévu au moins un rouleau (52), par lequel la bande (64) peut être mise en appui contre un élément de transport (28).

3. Dispositif selon la revendication 1 ou 2, **caractérisé en ce que** le dispositif de séparation (54) est localement fixe et, dans la position de la surface de guidage (48) écartée de l'élément de transport (28), est en saillie vers l'extérieur de la surface de guidage (48).

4. Dispositif selon une ou plusieurs des revendications précédentes, **caractérisé en ce que** le dispositif de séparation (54) comporte des ergots (88) destinés à passer à travers la bande (64).

5. Dispositif selon une ou plusieurs des revendications précédentes, **caractérisé en ce qu'**un rouleau (60), formant une réserve de bande (64), peut être sollicité par un frein (62).

6. Dispositif selon une ou plusieurs des revendications précédentes, **caractérisé en ce que** la surface de guidage (48) peut être déplacée au moyen d'un dispositif de manoeuvre (56) électrique, hydraulique ou pneumatique.

7. Dispositif selon une ou plusieurs des revendications précédentes, **caractérisé en ce que** la surface de guidage (48) peut être réglée au moyen d'une commande à came ou levier.

8. Dispositif selon une ou plusieurs des revendications précédentes, **caractérisé en ce que** la surface de guidage (48) est revêtue ou couverte par un revêtement à faible frottement, en particulier avec du PTFE.
